# EUROPEAN PATENT APPLICATION

(11) **EP 1 662 527 A1**
(43) Date of publication of application: **31.05.2006**
(21) Application number: 04772207.9
(22) Date of filing: 26.08.2004
(51) Int. Cl.: H01H 13/14, H01H 11/00, B29C 39/10, B29C 45/16, H01H 25/04, B29K 21/00, B29K 83/00, B29L 7/00

(54) **KEY-PAD AND METHOD OF PRODUCING THE SAME**

(30) Priority: 03.09.2003 JP 2003310960
(71) Applicant: SUNARROW LTD., Chuo-ku, Tokyo 104-0032 (JP)
(72) Inventor: TAKAHASHI, Hiroyoshi, (JP)
(74) Representative: Betten & Resch
(86) International application number: PCT/JP2004/012251
(87) International publication number: WO 2005/024871

(57) **Abstract**

The object of the invention is to find a new configuration, a material, and a manufacturing method of an elastomer keypad provided with a pressing element capable of pressing a switch element with less keystroke loss and clear clicking feeling, and further capable of simplifying processes more than insert molding method which uses the conventional pressing element made of a resin (resin chip). Concave portions 71 and 72 for forming silicone resin pressing elements 41 and 42 which are attached to keypads 2 and 21 are provided at predetermined positions in dies 51, 52, 61, and 62 for manufacturing a keypad; the concave portions are filled with a silicone resin 9 to start hardening; and subsequently the dies are supplied with a silicone rubber material to form keypad main bodies 2 and 21, so that keypads 2 and 21 are obtained with the silicone resin pressing elements 41 and 42 being integrated.

## Description

The present invention relates to a configuration, a material, and a manufacturing method of a keypad provided with pressing elements which constitutes a key unit for mobile equipment such as portable phones and personal digital assistants (PDA).

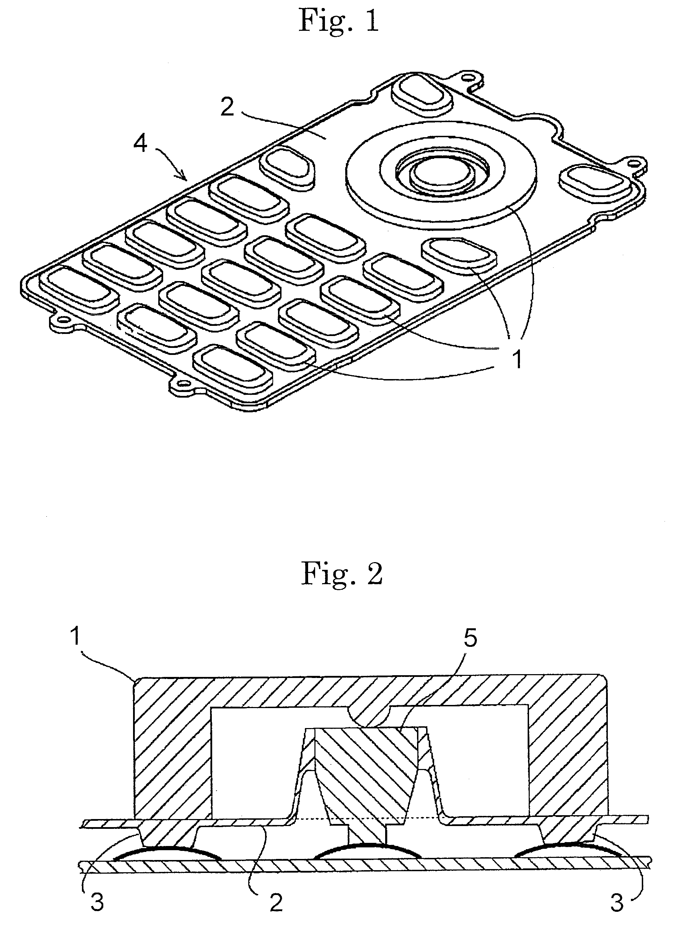

A key unit is one type of components constituting mobile equipment, and a multiplicity of keys (push buttons) for switch operation are assembled and arrayed on a surface of one sheet. Fig. 1 is a perspective view of one example of such key unit 4 viewed diagonally from the above. A portion seen as a somewhat large circular shape in the upper right of the drawing is a key assembly called multi-direction key, etc., which is integrally formed from keys for operating switches at five sections (directions) in total of usually four sections in a peripheral ring-like portion and one section in a central small disk-like portion. The keys arranged in three rows in the left hand direction are called Ten Keys, each of which functions to operate one switch.

Each key comprises a keypad made of a piece of soft elastomer (e.g., silicone rubber), and a key top made of a piece of hard material (e.g., polycarbonate resin, hereinafter referred to as "PC resin") attached on the surface of the keypad. On the back of the keypad which is not shown in Fig. 1, one or a plurality of switch-pressing projections (what is called "pressing elements 3") are provided at a position on a center line or at a required position off the center line of each key top. Such plurality of keys are arrayed on one surface to constitute one key unit 4. When a circuit substrate provided with switch elements at positions corresponding to the pressing elements 3 of each key is attached close to the bottom surface of the key unit, a series of groups of key switches are formed.

In the conventional key units, a pressing element is formed integrally of the same material as the keypad. In a key for a certain purpose (e.g., a multi-direction key, etc.), however, shortcomings including occurrence of keystroke loss or vague clicking feeling at the time of key-pressing due to the elastic deformation of the pressing elements have been pointed out.

Thus, for such specific keys, a method has been conceived of for forming only a pressing element of a hard resin (e.g., PC resin) separately from a keypad (hereinafter the hard resin is referred to as "resin chip 5"), and, by means of an insert molding method to be carried out by setting in advance the resin chip into a die for keypad-molding, implanting the pressing elements at a predetermined position of the keypad. For such a keypad configuration and a manufacturing method thereof, the applicant of the present application has previously filed a patent application (refer to Patent Literature 1). Patent Literature 1: Japanese Unexamined Patent Publication No. 2002-279860

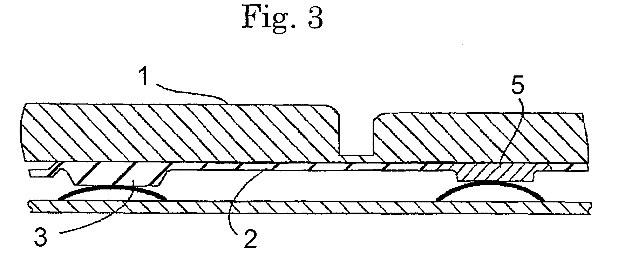

In Figs. 2 and 3, two examples of a multi-direction key with a resin chip implanted in a keypad are shown, which are manufactured according to the method of Patent Literature 1. Fig. 2 shows a four-direction key with a confirmation key which operates five dome-like switches in total of one central and four peripheral switches with one key top. An inverted conical-trapezoid-shaped object having a projection at its tip seen in the center of the drawing is a resin chip 5. Fig. 3 also shows a four-direction key with a confirmation key, wherein in order to reduce the thickness of the key, a key top and a keypad are both formed thinly, and the shape of the resin chip is made to be a disk. In this case, the area of adhesion between the keypad and the resin chip is small, causing a problem in adhesive strength.

In addition to the above-mentioned problem, the keypad configuration and the manufacturing method thereof disclosed in Patent Literature 1 has the steps of: forming a resin chip; carrying out annealing and primer treatments before placing the resin chip in a die in order to securely adhere a silicone rubber to the resin chip; and setting the resin chip in the die one by one; and the like. Therefore, increase in the number of steps has been inevitable compared with such method for integrating a keypad with a pressing element with a silicone rubber.

### Brief Description of the Drawings

Fig. 1 is a perspective view showing the overall configuration of the key unit including the multi-direction key.
Fig. 2 is a sectional view showing one example of the multi-direction key with a resin chip implanted by means of an insert molding method.
Fig. 3 is a sectional view showing another example of the multi-direction key with a resin chip implanted by means of an insert molding method.
Fig. 4 shows sectional views showing the structure of the die provided with concave portions for carrying out the insert molding method in Embodiment 1.
Fig. 5 is a sectional view showing the multi-direction key manufactured using the die in Fig. 4.
Fig. 6 shows sectional views showing the structure of the die provided with concave portions for carrying out the insert molding method in Embodiment 2.
Fig. 7 is a sectional view showing the multi-direction key manufactured using the die in Fig. 6.

### Disclosure of the Invention

An object of the invention is to find a new configuration, a material, and a manufacturing method of an elastomer keypad 2 provided with a pressing element 3 capable of pressing a switch element with less keystroke loss and clear clicking feeling, and, further, capable of simplifying processes more than in an insert molding method which uses the conventional resin chip.

The above-mentioned objects will be achieved by an elastomer keypad formed with a liquid thermosetting resin and provided with a pressing element for pressing a switch element, and a manufacturing method thereof.

For a liquid thermosetting resin to be adopted in the invention, a general thermosetting resin such as an epoxy resin or a phenol resin, or a silicone resin which is polyorganosiloxane containing in a molecule a trifunctional (unit T) or tetrafunctional (unit Q) siloxane unit would be appropriate. In the silicone resin, particularly a methylphenyl based straight silicone resin containing in a molecule a methyl group and a phenyl group, or various types of silicone modified organic resins (e.g., silicone modified epoxy resin) can be used.

Further, for an elastomer constituting a keypad main body, although a line of material varies depending on cases of employing a silicone resin or employing other thermosetting resins as a liquid thermosetting resin, it is preferable to employ a silicone rubber for the former, and to employ various thermoplastic elastomers (TPE) such as of polyester based, urethane based, and polyamide based, for the latter.

In the case of forming a main body of the keypad 2 with a silicone rubber and the pressing element 3 with a silicone resin, a catalyst is to be added onto a concave portion for forming the pressing element in a keypad-molding die (in a one-pack type), or a silicone resin mixed with liquid A and liquid B together with a catalyst is dropped onto the concave portion (in a two-pack type), and by heating the same to a predetermined temperature, a crosslinkhardening reaction is progressed, so that the silicone resin starts hardening, which leads to the formation of a silicone resin pressing element in the keypad-molding die, the pressing element becoming an insertion as it is in the insert molding method. Subsequently, when the silicone resin of the pressing element is in a semi-hardened state, a silicone rubber is supplied to the keypad-molding die, and molding is carried out by means of a compression molding method or a liquid injection molding method (LIM).

Moreover, in the case of forming the keypad main body with a thermoplastic elastomer and the pressing element with a thermosetting resin, a thermosetting resin is dropped onto a concave portion for forming a pressing element in a keypad-molding die, and by heating the same to a predetermined temperature, the thermosetting resin starts hardening, which leads to the formation of a thermosetting resin pressing element in the keypad-molding die, the pressing element becoming an insertion as it is in the insert molding method. Subsequently, when the thermosetting resin of the pressing element is in a semi-hardened state, by injecting the thermoplastic elastomer, a keypad is integrally formed with the keypad main body with the pressing element. It should be noted that, in this case, it is possible to form not only a pressing element but a key top simultaneously by means of a two-color molding method, for example.

(1) While the method described in Patent Literature 1 requires a resin chip molding process which is entirely different from the keypad molding process, the method according to the invention is directed to forming of the pressing element made of a liquid thermosetting resin and the keypad main body using the same die. Therefore, the method according to the invention is far more efficient.

(2) While the method according to Patent Literature 1 requires the molded resin chips to be set one by one in the die, the method according to the invention only requires the thermosetting resin to be dropped onto the concave portion in the die, which also realizes automation easily.

(3) In the case of forming the keypad main body with a silicone rubber using a silicone resin as the liquid thermosetting resin, due to siloxane bonding which is common to both of them, the bonding between the silicone resin pressing element and the silicone rubber is quite excellent, so that no special primer treatment or the like is required.

That allows a keypad manufacturing process to be considerably simplified.

(4) Further, since the silicone resin pressing element is softer than the PC resin pressing element and has moderate elasticity. Therefore, the clicking feeling thereof is softer than that of the PC resin, and further the silicone resin pressing element has the same clear clicking feeling.

### Best Mode for Carrying Out the Invention

Hereinafter, the best mode for carrying out the invention will be described by way of two embodiments.

Embodiment 1:

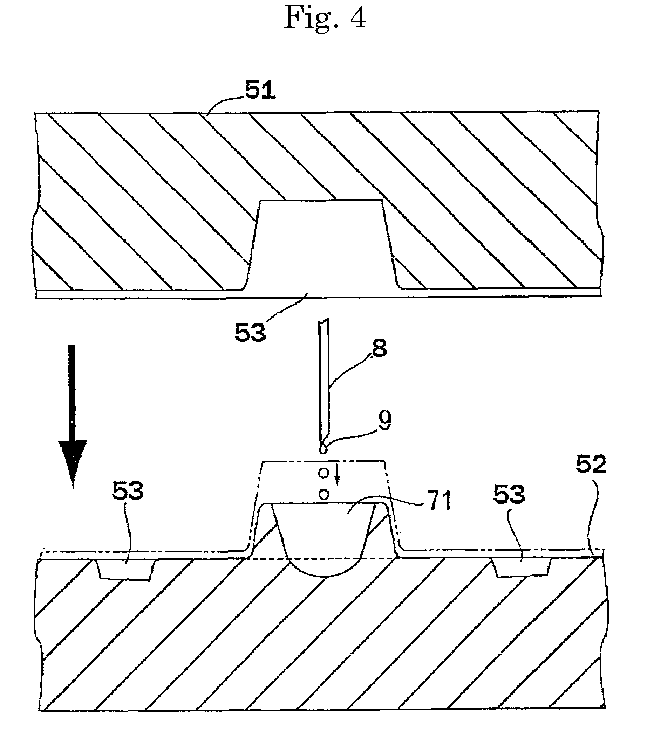

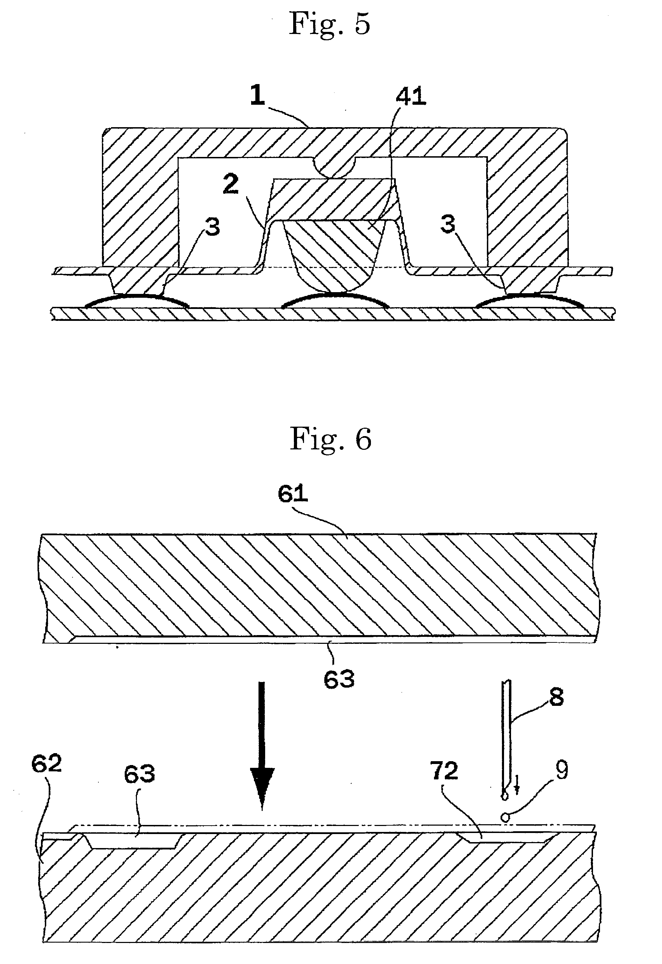

Figs. 4 and 5 show Embodiment 1 wherein a silicone resin and a silicone rubber are used, respectively, as a liquid thermosetting resin for forming a pressing element and as an elastomer for forming a keypad main body.

Fig. 4 shows sectional views of the configurations of dies 51 and 52, for manufacturing the four-direction key with a confirmation key shown in Fig. 2 according to the method of the invention. On the surface facing a cavity 53 of a lower die 52, a concave portion 71 for forming a silicone resin pressing element is provided, and a mixture of liquids A and B of silicone resin 9 is dropped onto the concave portion 71 from an injector 8.

As the silicone resin, a methylphenyl silicone resin which belongs to a straight silicone resin was used. The liquid A and liquid B were mixed at a ratio of 1:1. After deaeration, the mixture was dropped onto a bowl 71 from the injector 8 and left to stand for about 30 seconds. A silicone rubber substrate was placed on the surface of the die cavity 53 as the silicone resin started hardening, with the dies 51 and 52 being closed, and primary vulcanization was carried out at 170°C for about 3 minutes, followed by secondary vulcanization at 200°C for about one hour. It should be noted that while in the present embodiment, compression molding method using a silicone rubber substrate was used, it is also possible to employ what is called liquid injection molding (LIM) for injecting a liquid silicone rubber into the die.

Fig. 5 is a sectional view of a four-direction key with a confirmation key which is manufactured using the dies 51 and 52 in Fig. 4. While the configuration in which a key top 1 made of a hard resin is placed on a keypad 2 made of a silicone rubber having an integrally formed pressing element 3 is the same as that of Fig. 2, a silicone resin pressing element 41 is provided instead of the resin chip. The pressing element 41 is shaped like an inverted conical trapezoid having a rounded tip, with its top surface adhering to the back of the keypad 2. The resin chip in Fig. 2 is modified in such a manner that a silicone rubber layer be sandwiched between the top surface of the pressing element 41 and the key top 1 made of a hard resin, in order to improve the brittleness of the tip of the resin chip and the clicking feeling.

Embodiment 2:

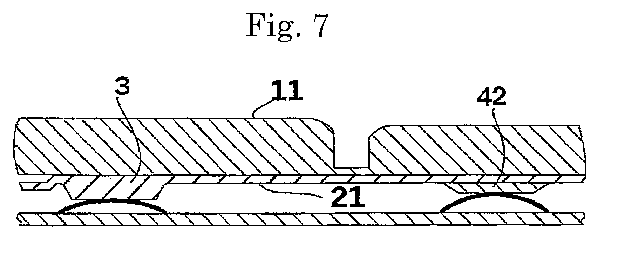

Figs. 6 and 7 show Embodiment 2 in which, similarly to the above Embodiment 1, a silicone resin is used as a liquid thermosetting resin for forming a pressing element and a silicone rubber is used as an elastomer for forming a keypad main body.

Fig. 6 shows sectional views of the configurations of the dies 61 and 62, for manufacturing a four-direction key with a confirmation key as shown in Fig. 3 according to the method of the invention. On the surface facing a cavity 63 of a lower die 62, a concave portion 72 for forming a silicone resin pressing element is provided, and a mixture of liquids A and B 9 of a silicone resin is dropped onto the concave portion 72 from an injector 8. The types and the handling method of a silicone resin are the same as those in Embodiment 1.

Fig. 7 is a sectional view of a four-direction key with a confirmation key which is manufactured using the dies 61 and 62 in Fig. 6. While the configuration in which a key top 11 made of a hard resin is placed on a keypad 21 made of a silicone rubber having an integrally formed pressing element 3 is the same as that of Fig. 3, a silicone resin pressing element 42 is provided instead of the resin chip. The top surface of the pressing element 42 is configured to adhere to the back of the keypad 21, in order to improve the clicking feeling and enlarge the area of adhesion.

The result of adhesion/peel strength evaluation test of the silicone resin and the silicone rubber in the keypad 2 made of the silicone rubber described in Embodiment 1 will be given below.

(1) When force applied to the adherend (without primer treatment) of the silicone resin and the silicone rubber after the primary vulcanization was 2.482 kgf in the first sample and was 2.549 kgf in the second sample, peeling was occurred on the surface of resin/rubber adhesion. The degree of peeling at this time was, respectively, 25% and 30%. When the adhesive strength of the surface of resin/rubber adhesion in the first and second samples are calculated from these results, the calculated adhesive strength are, respectively, 1.92 N/cm² and 1.97 N/cm².

(2) When force applied to the adherend (without primer treatment) of the silicone resin and the silicone rubber after the secondary vulcanization was 2.270 kgf in the first sample and was 2.158 kgf in the second sample, rupture was occurred at the rubber portion. When the adhesive strength of the surface of resin/rubber adhesion in the first and second samples are calculated from these results, the calculated adhesive strength are, respectively, 1.75 N/cm² and 1.67 N/cm².

(3) For comparison, when force applied to the conventional adherend (with primer treatment) of a chip made of a PC resin and a silicone rubber was 2.397 kgf in the first sample and was 1.954 kgf in the second sample, rupture was occurred at the rubber portion. When the adhesive strength of the surface of resin/rubber adhesion in the first and second samples are calculated from these results, the calculated adhesive strength are, respectively, 1.27 N/cm² and 1.03 N/cm².

As can be seen from the above, the adherend (without primer treatment) of the silicone resin and the silicone rubber after the secondary vulcanization exhibits better adhesive strength than that of the conventional adherend (with primer treatment) of the chip made of the PC resin and the silicone rubber.

### Industrial Applicability

The invention relates to mobile equipment such as portable phones, personal digital assistants (PDA), or the like which occupy a significant position in the information industry and the communication equipment manufacturer, and more particularly, an improved configuration, a material, and a manufacturing method of a keypad provided with a pressing element which constitutes a key unit for mobile equipment, so that the invention can contribute to development of these industries.

## Claims

1. A keypad made of an elastomer comprising a pressing element for pressing a switch element formed of a liquid thermosetting resin.

2. The keypad according to Claim 1, wherein the liquid thermosetting resin is either a methylphenyl silicone resin or a silicone modified epoxy resin, and the elastomer is a silicone rubber.

3. A method for manufacturing the keypad according to Claim 1, comprising filling a concave portion for forming a pressing element in a keypad-molding die with a liquid thermosetting resin to start hardening, and supplying the die with an elastomer to form a keypad main body.

## Amended claims

### Amended claims under Art. 19.1 PCT

**1.** (after amendment) A keypad made of an soft elastomer such as a silicone rubber, a thermoplastic elastomer and the like comprising a main body of a sheet form and a plurality of pressing elements to press switching elements provided on said main body, wherein all or a part of said pressing elements are formed with a liquid thermosetting resin.

**2.** The keypad according to Claim 1, wherein the liquid thermosetting resin is either a methylphenyl silicone resin or a silicone modified epoxy resin, and the elastomer is a silicone rubber.

**3.** (after amendment) A manufacturing method of a keypad made of an soft elastomer such as a silicone rubber, a thermoplastic elastomer and the like comprising a main body of a sheet form and a plurality of pressing elements to press switching elements provided on said main body,in which all or a part of said pressing elements are formed with a liquid thermosetting resin, wherein after the liquid thermosetting resin is filled in a concave portion for forming the pressing element in a keypad-molding die and then starts hardening, the main body of the keypad is formed by providing the elastomer into said die.
